# EUROPEAN PATENT SPECIFICATION

(11) **EP 3 339 620 B1**
(45) Date of publication and mention of the grant of the patent: **03.07.2024**
(21) Application number: 17159258.7
(22) Date of filing: 03.03.2017
(51) Int. Cl.: F02M 21/02

(54) **PASSIVE VALVE FOR A FUEL INJECTOR WITH A TENSION SPRING, FUEL INJECTOR AND METHODS FOR PRODUCING THE SAME**
PASSIVKLAPPE FÜR KRAFTSTOFFEINSPRITZER MIT EINER ZUGFEDER, KRAFTSTOFFEINSPRITZER UND VERFAHREN ZUR HERSTELLUNG DAVON
SOUPAPE PASSIVE POUR UN INJECTEUR DE CARBURANT AYANT UN RESSORT DE TENSION, INJECTEUR DE CARBURANT ET LEURS PROCÉDÉS DE PRODUCTION

(30) Priority: 20.12.2016 WO PCT/US2016/067816
(43) Date of publication of application: 27.06.2018
(73) Proprietor: Vitesco Technologies USA, LLC, Auburn Hills, MI 48326 (US)
(72) Inventor: Schüle, Harry, 92431 Neunburg V. Wald (DE); Hornby, Michael J., Williamsburg, VA 23188 (US); Czimmek, Perry Robert, Williamsburg, VA 23188 (US); Cosby, Douglas Edward, Newport News, VA 23606 (US)
(74) Representative: Vitesco Technologies

(56) References cited:
- EP-B1- 2 788 614
- DE-A1-102013 222 030
- US-A- 5 713 521
- US-A1- 2015 152 822
- US-A1- 2016 245 249

## Description

### TECHNICAL FIELD

The present disclosure relates to a passive valve for a fuel injector and to a method for producing the passive valve. It also relates to a fuel injector with the passive valve and with the active valve and to a method for producing the fuel injector. The fuel injector is in particular a gas injector for an internal combustion engine, preferably for direct injection into a combustion chamber of the engine.

### BACKGROUND

Using gases like hydrogen or methane as fuel for vehicles can be advantageous for environmental and legislative reasons. These gases can be produced out of renewable energies such as wind or solar power in a process known as power to gas. For example, hydrogen can be produced from electrolysis, and methane can be produced by means of a synthesis of hydrogen and CO₂. These gases are then carbon neutral and can contribute to a reduction of the emission of greenhouse gases. Methane and hydrogen are also flexible and can be used in household applications, industry, or in internal combustion engines.

When internal combustion engines are operated with gas such as methane or hydrogen, they are able to operate in an Otto cycle. This allows for very low particulate and NOₓ emissions when compared to the same engine operating with gasoline. Utilizing a gas direct injection system has an additional fuel consumption benefit, compared to a port injection system, due to a better volumetric efficiency. There is also the possibility of additional combustion strategies in combination with camshaft phasing, de-throttling, and injection phasing to achieve higher fuel efficiencies.

EP 2 788 614 B1 discloses an injector which is suitable for injecting gas directly into the combustion engine of an internal combustion engine. The injector has a valve assembly arrangement comprising a valve assembly of the inward opening type and a valve assembly of the outward opening type. The valve assembly of the outward opening type is axially arranged adjacent and fixedly coupled to the valve assembly of the inward opening type in such fashion that the valve assembly of the inward opening type is operable to inject fluid into the valve assembly of the outward opening type for increasing a fluid pressure in the valve assembly of the outward opening type to open the valve assembly of the outward opening type to enable dispensing of the fluid from the valve assembly arrangement.

DE 10 2013 222 030 A1 discloses a passive valve for a fuel injector comprising a valve body extending along a longitudinal axis from a fluid inlet end to a fluid outlet end, having a fluid outlet opening at the fluid outlet end and having a cavity which hydraulically couples the fluid inlet and to the fluid outlet end. Further a sealing element, which seals the fluid outlet opening in a closing position and is axially displaceable away from the position for unsealing the fluid outlet opening. It further comprises a spring element with a first axial end which is fixedly coupled to the valve body and a second axial end which is axially moveable relative to the valve body wherein the passive valve comprises a connection member, the connection member bridging an axial gap between the second axial end of the spring element and the sealing element and the mechanically coupling the second axial end of the spring element to the sealing element and the spring element exerts a spring force on the connection member.

US 2016/0245249 A1 discloses A valve assembly for a fluid injection valve contains a hollow valve body which hydraulically connects a fluid inlet to an injection orifice and has a longitudinal axis. A valve needle is received in the valve body in an axially displaceable fashion for sealing the injection orifice in a closing position. An electromagnetic actuator assembly is provided for displacing the valve needle away from the closing position, the actuator assembly containing a movable armature and a pole piece which is positionally fixed relative to the valve body. A guide element is positionally fixed relative to the pole piece, has a first guide surface for axially guiding the armature and a second guide surface for axially guiding the valve needle.

US 5,713,521 A discloses an apparatus for intermittently atomizing a fluid with the assistance of a gas or a mixture of gases . The apparatus includes a cylinder having a cylinder head with a valve seat and at least one flow passage, a piston driven within the cylinder by a rotating crankshaft, an injection valve having a valve head and a spring element urging the valve head into engagement with the valve seat to close the flow passage. The injection valve generally includes an actuating surface that cooperates with the piston to mechanically open the valve when the piston reaches the end of its compression stroke. As a result, the present invention delays the start of valve opening until the piston maximizes the atomizing pressure within the cylinder thereby advantageously maintaining small fluid drop sizes.

It is an object of the subject disclosure to specify a passive valve for an injector which enables a particularly large flow rate through the passive valve. It is a further object of the subject disclosure to provide a method for producing a passive valve which enables a particularly easy and/or precise adjustment of the flow rate. It is a further object of the present disclosure to specify an improved fuel injector.

These objects are achieved by a passive valve, a fuel injector and a method having the features of the independent claims. Advantageous embodiments and developments of the passive valve, the fuel injector and the method are specified in the dependent claims, in the following description and in the drawings.

### SUMMARY AND EMBODIMENTS

According to one aspect of the present disclosure, a passive valve for a fuel injector is specified. According to a yet another aspect, a fuel injector with the passive valve is specified. The fuel injector additionally comprise an active valve. The fuel injector is in particular configured for injecting gaseous fuels . In one embodiment, the gaseous fuel is selected from the group consisting of compressed natural gas, methane and hydrogen. According to further aspects, a method for producing the passive valve and a method for producing the fuel injector are specified.

The passive valve comprises a valve body. The valve body extends along a longitudinal axis from a fluid inlet end to a fluid outlet end. The valve body has a fluid outlet opening at the fluid outlet end and a cavity which hydraulically couples the fluid inlet end to the fluid outlet end. That the cavity hydraulically couples the fluid inlet end to the fluid outlet end means in particular that it fluidly connects the fluid inlet end to the fluid outlet end so that the fuel, in particular the gaseous fuel, may expediently be able to flow and be led through the cavity from the fluid inlet end to the fluid outlet end.

Further, the passive valve comprises a sealing element which seals the fluid outlet opening in a closing position and is axially displaceable away from the closing position for unsealing the fluid outlet opening. The passive valve is an outward opening valve. The sealing element is displaceable in axial direction from the fluid inlet end towards the fluid outlet end for unsealing the fluid outlet opening.

The valve body has a circumferential sidewall comprising a seat surface which defines the fluid outlet opening and the sealing element has a sealing surface which is in sealing contact with the seat surface when the sealing element is in the closing position. The sealing surface preferably has a slanted or curved cross-section. For example the sealing surface is a conical or spherical surface.

Additionally, the passive valve comprises a spring element. In one embodiment, the spring element is a coil spring.

The spring element has a first axial end which is fixedly coupled to the valve body. For example, the first axial end is in form-fit and/or force-fit connection with the valve body. Expediently, the first axial end of the spring element is positionally fix with respect to the valve body in this way. A second axial end of the spring element is axially moveable relative to the valve body, in particular inside the cavity.

The passive valve further comprises an elongated connection member which is fixed to the sealing member. According to the invention, the connection member is separate from the sealing member. That the connection member is separate from the sealing member means in particular that the sealing member and the connection member are separately manufactured parts and are only fixed to one another during assembly of the passive valve.

The connection member is rigid at least with respect to axial forces occurring during operation of the passive valve. To put it differently, the connection member is preferably configured such that dimensional changes of the connection member in axial direction during operation of the passive valve, in particular during one injection event, are negligible for the function of the valve.

The spring element and the sealing element are separated by an axial gap. This means in particular that there is no axial overlap of the spring element with the sealing element. To put it differently, any element of the passive valve which is in one piece with the sealing element is spaced apart in axial direction from the spring element; for the sake of clarity, this does not include the connection member which is a part that is separately manufactured from the sealing element.

The connection member bridges the axial gap between the second axial end of the spring element and the sealing element and mechanically coupling the second axial end of the spring element to the sealing element. In one embodiment, a first axial end of the connection member is fixed to the second axial end of the spring element or merges with the second axial end of the spring element. Additionally or alternatively, a second axial end of the connection member may preferably be fixed to the sealing element.

The spring element is a tension spring. It is preloaded by expansion. In this way, it exerts a spring force on the connection member. In particular, it pulls the first axial end of the connection member which is remote from the sealing element in axial direction towards the fluid inlet end. The connection member transfers the spring force to the sealing element for biasing the sealing element in axial direction towards the closing position. In particular, the connection member is rigid or at least capable of transferring tractive forces in axial direction towards the fluid inlet end.

With advantage, a particular large hydraulic diameter of the passive valve is achievable by means of the tension spring and the connection member. A valve stem which occupies a large volume and to which sealing elements may be connected in conventional valves is advantageously obsolete in the passive valve according to the present disclosure.

The sealing element may preferably represent the entire valve needle, i.e. the valve needle in particular consists of the sealing element. For example, the axial extension of the valve needle is at most twice as large as its extension in radial direction, in particular it is at most as large as its extension in radial direction. The extension in radial direction is preferably the maximum diameter of the sealing element. In this way, a particularly advantageous opening and/or closing behavior of the passive valve is achievable due to the small inertia of the valve needle which is represented only by the sealing element.

In accordance with the invention the sealing element comprises a sealing portion. In one development, it additionally comprises a guide portion upstream of the sealing portion. The sealing portion may expediently comprise the sealing surface of the sealing element. The sealing surface preferably extends in radial outward direction from the guide portion; for example, it is a conical surface.

In one development, the guide portion has a plurality of circumferentially distributed guiding surfaces which are in sliding contact with an internal surface of the valve body which defines the cavity and which are separated in circumferential direction by a plurality of flow channels extending along the guide portion in axial direction to the sealing portion. The guide portion preferably has a plurality of radially extending webs which define the flow channels and have radially outward facing ends, each radially outward facing end comprising a respective one of the guiding surfaces. In this way, a particularly large hydraulic diameter for the fluid flow along the sealing element is achievable.

In an expedient embodiment, the connection member is spaced apart from the valve body in radial direction by a radial gap at least in the region of the axial gap between the spring element and the sealing element. The radial gap preferably extends completely circumferentially around the connection member. The radial gap may expediently be void, i.e. not occupied by other elements of the passive valve, and represents a fluid channel for fluid flowing through the passive valve from the fluid inlet end to the fluid outlet end.

Preferably, a minimum width of the radial gap is at least as large as a maximum dimension of the connection member in radial direction in the region of the axial gap. To put it differently, the portion of the connection member which axially overlaps the axial gap between the spring element and the sealing element has a maximum lateral extension which at most as large as a minimum radial distance of said portion of the connection member from the surface of the cavity. In this way, a particular large hydraulic diameter is available for the fluid flowing through the passive valve.

According to the Invention the spring element and the connection member are integrally formed as a one-pieced part, in particular from one piece of spring wire. In this way, the spring element and the connection member are easily and cost efficiently manufacturable. A particularly small volume of the spring element and the connection member is achievable in this way so that a particularly large volume of the cavity can remain avoid and is available for the fluid flow. The expression "integrally formed as a one-pieced part" means in the present context that the spring element and the connection member are not assembled from a plurality of parts which are connected to one another during the manufacturing process of the passive valve. Rather, the spring element and the connection member, together, are a single workpiece or made from a single workpiece.

According to the invention the second axial end of the connection member is fixed to the sealing member by means of a crimped connection and/or a welded connection and/or a brazed connection. In a further embodiment, the sealing element has an axial opening into which or through which the connection member extends and in particular projects on a side of the sealing element facing away from the fluid inlet end. The axial opening is a through hole, e.g. a cylindrical through hole, in one development. Expediently, the axial opening of the sealing element is fluid-tightly sealed by the second axial end of the connection member and the crimped, welded and/or brazed connection.

With advantage, a crimped, welded or a brazed connection is particularly easily producible with the connection member extending into or through the opening of the sealing element. The position of the second end of the connection member relative to the sealing element is particularly easily adjustable during manufacturing the passive valve. When the second axial end of the connection member extends through the opening and in particular projects from the opening on the side of the sealing element facing away from the fluid inlet end, the crimped, welded or brazed connection can be easily manufactured at the exterior of the passive valve.

According to the invention the sealing element has a constriction and the second axial end of the connection member engages the constriction for establishing a form-fit and/or force-fit connection with the sealing element in order to fix the second axial end of the connection member to the sealing element. For example, the second axial end of the connection member has one or more windings which is/are located in the region of the constriction, in particular being wound around the connection member in the region of the constriction.

According to the invention the cavity has a constriction separating an upper portion of the cavity, adjacent to the fluid inlet end, from a lower portion of the cavity, adjacent to the fluid outlet end. In particular, the cross-section of the upper portion and the cross-section of the lower portion of the cavity each are larger than the cross-section of the constriction. For example, the upper portion, the constriction and the lower portion are cylindrical sections of the cavity, with the cylindrical portion representing the constriction having the smallest diameter.

In an expedient development, the external surface of the valve body of the passive valve has a circumferential recess which axially overlaps the constriction of the cavity. The circumferential recess is in particular configured for accommodating a combustion seal. In this way, the passive valve is, for example, configured for being sealingly received in a receptacle bore of a cylinder head of an internal combustion engine.

In one development, the sealing element - i.e. in particular the entire valve needle - is received in the lower portion of the cavity, the spring element is received in the upper portion of the cavity and at least a portion of the elongated connection member is arranged inside the constriction. In this way, a particularly large cross-sectional area is available for the fluid flow from the upper portion to the lower portion in the region of the constriction.

In accordance with the invention the spring element has first and second portions. The second portion has a smaller lateral extension than the first portion. For example, the first and second portions have windings of different diameter. In particular, the first and second portions are sections of a coil spring which is made from one piece of spring wire. Preferably, the first portion comprises the first axial end of the spring element. In an advantageous development, it bears on a front surface of the valve body at the fluid inlet end for fixedly coupling the first axial end of the spring element to the valve body. In particular, the first portion of the spring element is in form fit engagement with the front surface. The second portion is arranged subsequent to the first portion in direction towards the fluid outlet end and received in the cavity.

According to the invention the fuel injector comprises an active valve in addition to the passive valve. The active valve preferably comprises an electromagnetic, piezoelectric or magnetostrictive actuator assembly for operating a valve assembly of the active valve.

The valve assembly of the active valve is in particular an inward opening valve assembly, i.e. a valve member of the active valve which is sealing an outflow opening of the active valve is axially displaceable with respect to a longitudinal axis of the active valve in direction towards a fluid inlet end of the active valve for unsealing the outflow opening of the active valve.

In an expedient embodiment, the active valve is positioned upstream of the passive valve and operable to inject fuel into the cavity of the valve body of the passive valve. In particular, the active valve and the passive valve are adapted to one another such that the sealing element of the passive valve is displaced away from the closing position against the bias of the spring element by the hydraulic or - in case of a gaseous fuel - the pneumatic force of the fuel injected into the cavity of the valve body of the passive valve by the active valve, in particular through the outflow opening of the active valve. The passive valve according to the present disclosure is particularly well controllable by the active valve of the fuel injector.

In one embodiment, the active valve - in particular the valve assembly of the active valve - has a further valve body. The valve body of the active valve comprises an outflow end. The valve body of the passive valve and the valve body of the active valve may expediently be separate pieces. In an expedient embodiment, the valve body of the passive valve is shifted into the outflow end of the valve body of the active valve.

In one embodiment, the outflow end of the valve body of the active valve has a radially extending surface and the first portion of the spring element is in contact with said radially extending surface on its side facing away from the front surface of the valve body of the passive valve. To put it differently, the first portion of the spring element is preferably in form fit connection with the valve body of the active valve and with the valve body of the passive valve, respectively, at its opposite axial ends. In this way, the first axial end of the spring element can be easily, reliably and reproducibly fixed with respect to the valve body of the passive valve during assembly of the fuel injector, in particular when the valve bodies of the active and the passive valves are fixed to one another.

According to one embodiment, the method for producing the passive valve comprises the following steps:
- expanding the spring element to a preloaded state in which the spring force of the spring element has a value which deviates less than a predefined target value from a predefined value and holding the spring element in the preloaded state, and
- fixing the connection member to the sealing element while the spring element is in the preloaded state.

In this way, the spring element can be calibrated particularly easily and/or precisely. With advantage, calibration of the spring element is possible during assembly of the passive valve. In this way, tolerances - such as dimensional tolerances of the sealing element, the valve body and/or the spring element can advantageously be taken into account for calibration of the spring element.

According to one embodiment, expanding the spring element to a preloaded state in which the spring force of the spring element has a value which deviates less than a predefined target value from a predefined value comprises expanding the spring by a predefined amount, measuring the spring force of the spring element while the spring element is expanded by the predefined amount, comparing the measured value of the spring force with the predefined value, and changing the expansion of the spring element if the deviation of the measured spring force from the predefined value is larger than the target value. Preferably, the method comprises iterating these steps until the deviation of the measured spring force from the predefined value is smaller than the predefined target value.

In one embodiment of the method, the connection member is shifted through the axial opening of the sealing element before the spring element is expanded to the preloaded state and expanding the spring element to the preloaded state in particular comprises grasping the connection member with a tool, preferably on the side of the sealing element facing away from the fuel inlet end, and pulling the connection member with the tool for expanding the spring element.

According to one embodiment, the method for producing the fuel injector comprises the method for producing the passive valve and a method step according to which the first axial end of the spring element is fixed to the valve body of the passive valve. In one development, fixing the first axial end of the spring element to the valve body of the passive valve comprises bringing the first axial end of the spring element in form fit connection with a front surface of the valve body of the passive valve and in form fit connection with a radially extending surface of the outflow end of the valve body of the active valve. For example, this is achieved by positioning the first axial end of the spring element between said front surface and said radially extending surface and shifting the fluid inlet end of the valve body of the passive valve into the fluid outlet end of the valve body of the active valve.

### BRIEF DESCRIPTION OF THE DRAWINGS

Further advantages, advantageous embodiments and developments of the passive valve, the fuel injector and the method will become apparent from the exemplary embodiments which are described below in association with schematic figures.

In the figures:
Figure 1 shows a longitudinal section view of a fuel injector according to a first exemplary embodiment,
Figure 2A shows a longitudinal section view of a passive valve of the fuel injector according to the first embodiment in a closed configuration,
Figure 2B shows a longitudinal view of the passive valve of the fuel injector according to the first embodiment in a fully open configuration,
Figure 3A shows a side view of a spring element, a connection member and a sealing element of the passive valve of the fuel injector according to the first embodiment,
Figure 3B shows a perspective view of the spring element, the connection member and the sealing element of the passive valve of the fuel injector according to the first embodiment,

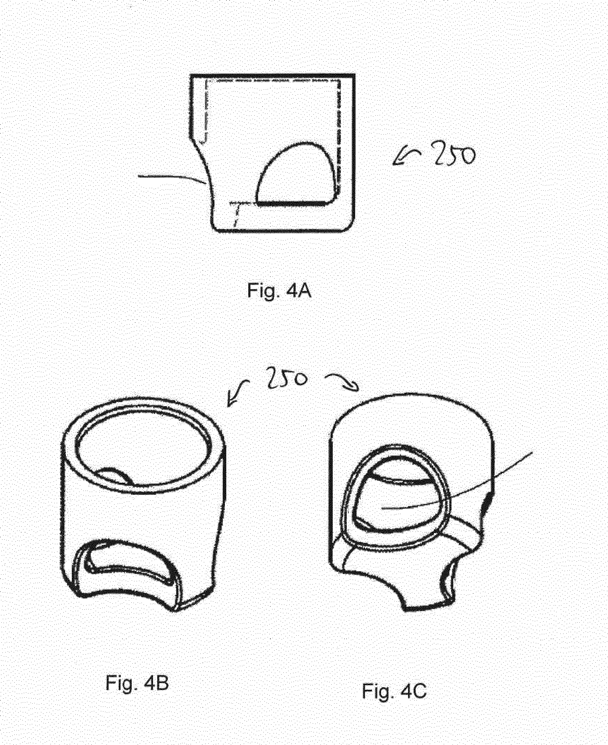

Figure 4A shows a side view of a poppet stop of the passive valve of the fuel injector according to the first embodiment,
Figures 4B and 4C show different perspective views of the poppet stop of the passive valve of the fuel injector according to the first embodiment,
Figure 5 shows a longitudinal section view of a passive valve according to a second exemplary embodiment,
Figure 6 shows the spring element, the connection member and the sealing element of the passive valve according to the second embodiment in a perspective view,
Figure 7A shows a longitudinal section view of a passive valve according to a third exemplary embodiment in a closed configuration,
Figure 7B shows a longitudinal section view of the passive valve according to the third exemplary embodiment in a fully open configuration,
Figure 8A shows a side view of the spring element, the connection member and the sealing element of the passive valve according to the third exemplary embodiment, and
Figure 8B shows a perspective views of the spring element, the connection member and the sealing element of the passive valve according to a third exemplary embodiment.

### DETAILED DESCRIPTION OF EMBODIMENTS

In the exemplary embodiments and figures, similar, identical or similarly acting elements are provided with the same reference symbols. In some figures, individual reference symbols may be omitted to improve the clarity of the figures.

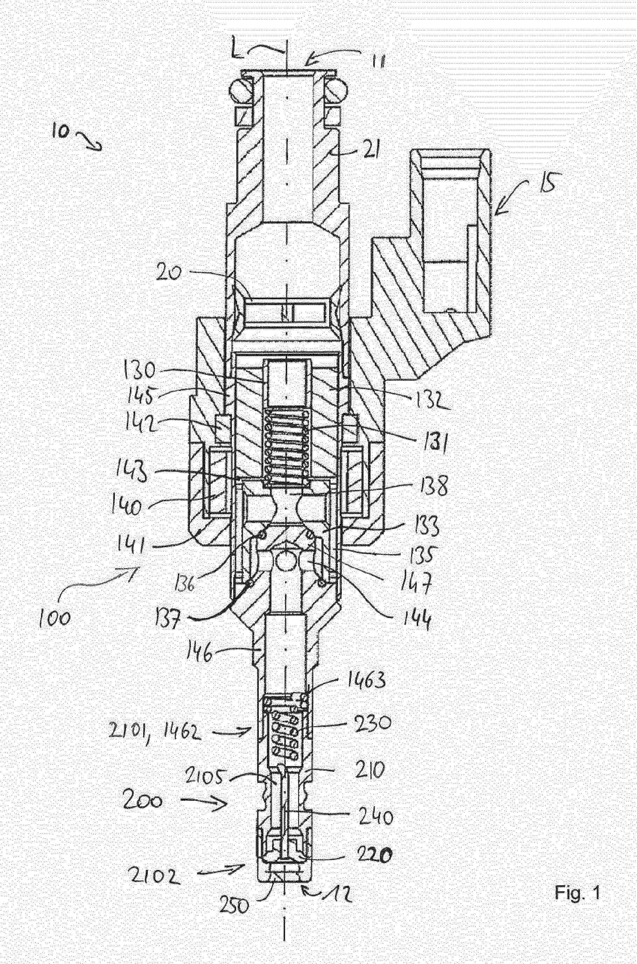

FIG. 1 shows a longitudinal section view of a fuel injector 10 according to a first exemplary embodiment. The fuel injector 10 is configured for injecting gaseous fuels such as compressed natural gas directly into a combustion chamber (not shown in the figures) of an internal combustion engine (not shown in the figures).

The fuel injector 10 extends along a longitudinal axis L from an inlet 11 to an outlet 12. The inlet 11 is configured to be connected to a fuel supply line of a high pressure gas phase fuel supply (not shown in the figures). The outlet 12 is configured to be arranged in the combustion chamber.

Gas phase fuel enters the inlet 11 under pressure, and flows into an interior portion of an inlet tube 21 of the fuel injector 10. An 0-ring 22 and a backup ring 23 are located in an 0-ring groove 24 of inlet tube 21 and provide the seal between the injector 10 and the fuel supply line to which the inlet tube 21 is hydraulically - i.e. fluidly - and mechanically connectable with the aid of the O-ring 22. The inlet tube 21 is therefore sometimes also denoted as an "O-ring adapter". A filter element 20 is positioned inside the inlet tube 21. The fuel is transferred through the filter element 24 before entering into the active valve 100.

The injector 10 includes an active valve 100 downstream of the inlet tube 21. The active valve 100 is also denoted as a "metering valve subassembly" herein. The injector 10 further includes a passive valve 200, downstream of the active valve 100. The passive valve 200 is also denoted as an "isolation valve subassembly" herein.

The active valve 100 is configured to be controlled by an electronic control unit for selective enabling and prohibiting gas phase fuel flow through the active valve 100. The active valve 100 comprises an electromagnetic actuator assembly, comprising a coil 140, a magnetic return 141 sometimes also denoted as a magnetic yoke, a flux washer 142, a stator 132 sometimes also denoted as a pole piece, and an armature 133. A magnetic air gap 143 is established between the stator 132 and the armature 133 in a closed configuration of the active valve 100. The actuator assembly performs power functions, e.g. converting electrical current, applied to electrical connector 15 by the electronic control unit, to a magnetic driving force for electrical permitting gas phase fuel flow through the injector 10.

The active valve 100 has a valve body comprising an upper portion 145 and a lower portion 146. The upper portion 145 of the valve body of the active valve 100 is also denoted herein as an "upper housing" and the lower portion of the valve body of the active valve 100 is also denoted herein as a "lower housing".

An upstream end of the upper portion 145 is shifted into and fixed to a downstream end of the inlet tube 21 for fixing the active valve 100 to the inlet tube 21. An end section of the upper portion 145 which is remote from the inlet tube 21 is fixedly connected to the lower portion 146.

A plug shaped seat element 147 is formed integrally with the lower portion 146 of the valve body of the active valve 100. The seat element 147 is arranged inside the upper portion 145 of the valve body of the active valve 100. The plug shaped seat element 547 closes the downstream end of the upper portion 145, apart from a plurality of radial flow channels 144 which lead into a blind hole in the seat element 147. The blind hole extends axially inside the seat element 147 and opens into the cavity of the lower portion 146 of the valve body of the active valve 100. The radial flow channels 144 are also denoted as a "lower housing transvers flow path geometry" herein.

The armature 133 has a recess in which the seat element 147 is received. A central bore 138 extends axially through the armature 133 to the recess from a top surface of the armature 153 which faces towards the stator 132. Transverse flow channels 134 branch off from the axial flow channel and extends radially to an external circumferential surface of the armature 133. The external circumferential surface of the armature 153 and the upper portion 145 of the valve body of the active valve 100 are shaped to provide axial flow channels 135 along the recess of the armature 153 between the armature 153 and the upper portion 145. The axial flow channels 135 in particular represent a non-annular flow geometry. In this way, the central bore 138 communicates with the armature transverse flow geometry 134 that defines a flow path to non-annular flow geometry 135 along the outside of the armature 133 and inside the upper housing 145. The axial flow channels 135 may be separated in circumferential direction by guiding surfaces of the armature 133. The guiding surfaces of the armature 133 may be in sliding mechanical contact with the upper portion 145 of the valve body of the active valve 100 fox axially guiding the armature 133.

The surface of the recess of the armature 133 defines moveable sealing surfaces of the active valve 100. The movable sealing surfaces are in particular axially displaceable relative to the plug shaped seat element 147. They are operable to engage in sealing contact with corresponding seat surfaces of the seat element 147 in a closing position of the armature 133. The armature 133 is displaceable away from the closing position, driven by the magnetic force generated by the actuator assembly, in axial direction towards the stator 132 for moving the sealing surfaces out of contact with the seat surfaces. In the present embodiment, the seat surfaces comprise an upper internal O-ring 136 and a lower internal O-ring 137. In the present embodiment, the seat element 147 has a first seat surface comprising the upper internal O-ring 136 and the second seat surface comprising the lower internal O-ring 137. The seat surfaces may comprises inclined surfaces of the seat element 147, said inclined surfaces be inclined with respect to the longitudinal axis L, e.g. they are conical or spherical surfaces. They may comprise recesses for accommodating portions of the upper and lower internal O-rings 136, 137. The radial flow channels 144 of the seat element are positioned axially between the first and second seat surfaces and, thus, between the upper internal O-ring 136 and the lower internal O-ring 137.

While the moveable sealing surfaces engage an upper internal 0-ring 136 and a lower internal 0-ring 137 which, in the present embodiment, are located in suitable 0-ring geometry of the seat element 147 to stop the flow of gas phase fuel, the 0-rings 136, 137 may be located in suitable 0- ring geometry of the armature 133 and move coincident with the armature and engage on seat surfaces - in particular metallic seat surfaces - on the seat element 147, or one 0-ring may be located in suitable 0-ring geometry on the armature 133 and another may be located in a suitable 0-ring geometry of the seat element 147. The upper internal 0-ring 36 and lower internal 0-ring 37 have a round (circular) cross-section in the present embodiment, but any other shape of cross- section is also conceivable. Each internal 0-rings could be replaced by a plurality of O-rings and/or by a bonded elastomeric seal or vulcanization.

The active valve 100 comprises a metering valve spring 131 which is seated against the armature 133 and against a calibration tube 130 at its opposite axial ends. The calibration tube 130 is engaged on an interior surface of the stator 132 and fixed in place by friction forces after an initial positioning axial movement during the calibration of metering spring force for the injector 10 at manufacturing. The flow path through the active valve 100 includes the calibration tube 130, the interior of the stator 132 and the inter-coil space of the metering valve spring 131.

The metering valve spring 131 is preloaded so that it provides the return force to close the active valve 100. In this way, the metering valve spring 131 biases the armature 133 in contact with the seat surfaces of the seat element 147 - i.e. the upper and lower internal O-rings 136, 137 in the present embodiment - when the actuator assembly is de-energized so that the sealing surfaces are in sealing contact with the seat surfaces and prevent gas flow through the radial flow channels 144 of the seat element 147 from the upper portion 145 to the lower portion 146 of the valve of the active valve 100.

The moveable sealing surfaces move with the armature 133 when the electromagnetic coil 140 coaxially located external to the valve body has electric current passing through the coil conductor to generate a magnetic force to cause the movement of the armature 133 toward the stator 132, reducing the air gap 143 distance on the stator end of the armature 133. In this way, an annular gap is opened between the lower internal 0-ring 137 and the lower sealing surface of the armature 133, enabling gas flow from axial flow channels 135 outside of the armature into the gap and further into the recess of the armature 133 to the radial flow channels 144 of the seat element 147.

Simultaneous to the gap opening between the lower sealing surface of the armature 133 and the lower internal 0-ring 137, a further annular gap is opened between the upper sealing surface of the armature 133 - located at the bottom of its recess - and the upper internal 0-ring 136. The further annular gap defines a flow path for the gas phase fuel to flow from the central bore 138 into the further annular gap into the recess and to the radial flow channels 144 of the seat element 147. Advantageously, gas flows to the radial flow channels 144 from both axial sides so that a high flow rate of the active valve 100 is achievable.

The active valve 100 and other parts of the injector 10 described above in connection with the present embodiment, such as the inlet tube 21 and the filter 20, are also useful for other embodiments of the fuel injector 10. In particular, they are also suitable for a fuel injector 10 which does not have a passive valve 200 but injects gas phase fuel into an intake manifold of the engine. In this case, the outflow end 1462 of the lower housing may be positioned in the intake manifold.

In the present embodiment, however, the active valve 100 is arranged upstream of the passive valve 200 so that the passive valve 200 isolates the active valve 100 from the combustion gas environment in the combustion chamber.

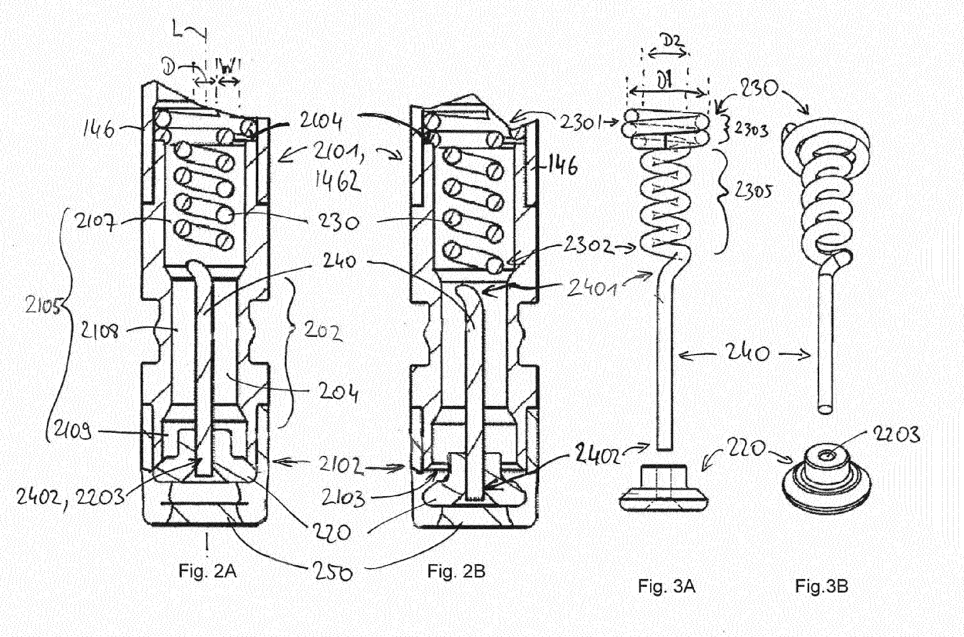

Figures 2A and 2B show the passive valve 200 in more detail in corresponding longitudinal section views. The longitudinal section view of figure 2A shows the passive valve 200 in a closed configuration and the longitudinal section view of figure 2B shows the passive valve 200 in a fully open configuration.

The passive valve 200 has a valve body 210, a sealing element 220, a spring element 230, and a connection member 240. The sealing element 220, the spring element 230 and the connection member 240 are shown in a side view in figure 3A and in a perspective view in figure 3B. In figures 3A and 3B, the sealing element 220 is shown spaced apart from the connection member 240 of the spring element 230, for example before fixing the sealing element 220 to the connection member 240 in a method for producing the passive valve 200.

The valve body 210 of the passive valve 200 extends from a fluid inlet end 2101 to a fluid outlet end 2102. The valve body 210 has a cavity 2105 which hydraulically -i.e. fluidly - couples the fluid inlet end 2101 to the fluid outlet end 2102. The cavity has an upper portion 2107 adjacent to the fluid inlet end 2101, a lower portion 2109 adjacent to the fluid outlet end 2102 and a constriction 2108 between the upper portion 2107 and the lower portion 2109. In the region of the constriction 2108, the valve body 210 has a groove in its external circumferential surface to accept a combustion seal (not shown in the figures) for providing a seal between the injector 10 and the cylinder head of the internal combustion engine.

It is also conceivable for this and other embodiments of the passive valve 200 that the cavity 2105 has no constriction 2108. For example, it has the same cross-sectional area at all positions from the fluid inlet end 2101 to the fluid outlet end 2102. In this way, a particularly large flow rate is achievable. In particular when the cavity 2105 does not have the constriction 2018, it may be advantageous for the mechanical stability of the valve body 210 that it does not have a groove in its external surface for receiving the combustion seal. In this case, the combustion seal may for example be vulcanized onto the external surface of the valve body 210. In this way, a reliable positioning of the combustion seal is achievable without a groove in the external surface of the valve body 210.

At the fluid outlet end 2102, the valve body 210 of the passive valve 200 has a fluid outlet opening 2103. The fluid outlet opening 2103 is sealed by the sealing element 220 when the sealing element 220 is in a closing position. The sealing element 220 is received in the lower portion 2109 of the cavity 2105. The sealing element 220 may project from the fluid outlet opening 2103 in axial direction away from the fluid inlet end 2101. In axial direction towards the fluid inlet end 2101, it preferably does not project beyond the lower portion 2109 of the cavity 2105.

The sealing element 220 is axially displaceable along the longitudinal axis L of the passive valve 200 in direction from the fluid inlet end 2101 towards the fluid outlet end 2102 for unsealing the fluid outlet opening 2103 and, thus, enabling gas flow through the fluid outlet opening 2103 out of the passive valve 200. For the sake of clarity, the longitudinal axis L of the passive valve 200 coincides with the longitudinal axis L of the active valve 100 and of the fuel injector 10 in the present embodiment.

The sealing element 220 can also be denoted as a poppet. The passive valve 200 is, thus, an outward opening poppet valve.

In the present embodiment, the maximum displacability of the sealing element 220 away from the closing position is limited by an optional poppet stop 250. The poppet stop 250 is shaped as a cup which is shifted over the fluid outlet end 2101 of the valve body 210 of the passive valve 200 in the present embodiment. The poppet stop 250 includes openings that define an outlet 12 for the gas phase fuel to exit the injector 10 and enter the combustion chamber of the internal combustion engine.

The sealing element 220 is configured and arranged such that it may travel to but is limited in further travel by an interior surface of the poppet stop 250. The maximum distance the sealing element 220 may travel to the poppet stop 250 may be selected at manufacture and additionally this selection may determine the maximum mass flow rate of the injector 10. The poppet stop 250 may additionally be operable to limit off-axis displacement (transverse translation or freedom of movement) of sealing element 220.

The spring element 230 is a coil spring which has a first portion 2303 comprising a first axial end 2301 of the spring element 230 and a second portion 2305 comprising a second axial end 2302 of the spring element 230. The first portion 2303 has a first lateral extension D1 which is larger than the lateral extension D2 of the second portion 2305. The lateral extensions D1, D2 are in particular the external diameters of the windings of the coils in the first portion 2303 and the second portion 2305, respectively.

The first portion 2303 bears on the front surface 2104 of the valve body 200 and at the fluid inlet and 2101 so that the first portion 2303 is in form fit engagement with the front surface 2104 and blocks axial movement of the first axial end 2301 of the spring element 230 in direction towards the fluid outlet end 2102. The second portion 2305 is arranged subsequent to the first portion 2303 in direction towards the fluid outlet end 2102 and is received in the upper portion 2107 of the cavity 2105 such that the second axial end 2302 of the spring element 230 is axially movable relative to the valve body 210.

During assembly of the fuel injector 10, the valve body 210 of the passive valve 200 with the first portion 2303 of the spring element 213 bearing on the front surface 2104 is shifted into the lower portion 146 of the valve body of the active valve 100. The lower portion 146 of the valve body of the active valve 100 comprises a radially extending surface 1463 adjacent to the outflow end 1462 of the active valve 100. The valve body 210 of the passive valve 200 is shifted into the lower portion 146 of the valve body of the active valve 100 until the first portion 2303 of the spring element 230 is in contact with said radially extending surface 1463 on its side facing away from the front surface 2104 of the valve body 210 of the passive valve 200. It is also conceivable that the spring element 230 is inserted into the lower portion 146 of the valve body of the active valve 100 and the valve body 210 of the passive valve 200 is subsequently inserted into the lower portion 146 until the first portion 2303 of the spring element 230 is in form fit connection with both, the radially extending surface 1463 of the lower portion 146 of the valve body of the active valve 100 and with the front surface 2104 of the valve body 210 of the passive valve 200.

A portion of the spring wire from which the coil spring - representing the spring element 230 in the present embodiment - is made extends straight and coaxially to the longitudinal axis L from the second axial end 2302 of the spring element 230 through the constriction 2108 of the cavity 2105 of the valve body 210 into the lower portion 2109 of the cavity 2105. A free end of the straight portion of the spring wire extends through an axial opening 2203 of the sealing element 220.

The axial opening 2203 of the sealing element 220 is a central, cylindrical through hole in this embodiment. The free end of the straight portion of the spring wire projects from the through hole on a side of the sealing element 220 facing away from the fluid inlet end 2101 into a conical recess of the sealing element 220 at the side of the sealing element 220 facing away from the fluid inlet portion 2101.

The free end of the straight portion of the spring wire is fixed to the sealing element 220 by a crimped connection, the crimped connection in particular being arranged in the region of the through hole. Alternatively or additionally, the free end of the straight portion of the spring wire may be fixed to the sealing element 220 by means of a welded and/or brazed connection. The welded and/or brazed connection may, for example, be established in the region of the conical recess.

In this way, the straight portion of the spring wire represents a connection member 240 which is separate from and fixed to the sealing element 220. The transition from the windings of the second portion 2305 of the spring element 230 to the straight portion of the spring wire defines the second axial end 2302 of the spring element 230 and a first axial end 2401 of the connection member 240. Thus, the connection member 240 merges with the second portion 2305 of the spring element 230 at its first axial end 2401. A second axial end 2402 of the connection member 240 is represented by the free end of the straight portion of the spring wire and is fixed to the sealing element 220. Thus, the connection member 240 bridges the axial gap 202 between the second axial end 2302 of spring element 230 and the sealing element 220. By means of the straight portion of the spring wire which represents the connection member 240, the sealing element 220 is mechanically coupled to the second axial end 2302 of the spring element 230.

In the region of the axial gap 202, the connection member 240 is spaced apart from the valve body 210 by a radial gap 204 which extends completely circumferentially around the connection member 240. A minimum width W of the radial gap 204 is at least as large as a maximum dimension D of the connection member 240 in radial direction in the region of the axial gap 202 between the spring element 230 and the sealing element 220. For example, the radial gap 204 has a size of at least 2 mm, the maximum radial dimension D of the connection member 240 in the region of the axial gap 202 being 1.5 mm or less. In one embodiment, in the region of the axial gap 202, the valve body 210 has an outer diameter of 6 mm and a wall thickness of 1 mm while the maximum radial dimension D has a value of 1 mm, resulting in a radial gap 204 width W of 3 mm.

The spring element 230 and the connection member 240 are dimensioned such that the spring element 230 is preloaded by expansion - i.e. the spring element 230 acts as a tension spring - so that it exerts a spring force on the connection member 240, pulling the connection member 240 in axial direction towards the fluid inlet end 2101. The connection member 240 transfers the spring force to the sealing element 220. In this way, the preloaded spring element 230 acts on the sealing element 220 via the connection member 240 and biases the sealing element 220 in axial direction towards the closing position. Since the spring wire is stressed along its elongation direction in the region where it represents the connection member 240 and is stressed in direction transverse to its direction of elongation in the region of the spring element 230, the dimensional change of the spring wire in the region where it represents the connection member 240 is negligible and the connection member 240 can be regarded as rigid for the function of the passive valve 200.

In one embodiment of a method for producing the passive valve 200, the free end of the straight portion of the spring wire which represents the connection member 240 is shifted through the through hole representing the axial opening 2203. Subsequently, it is grasped with a tool (not shown in the figures), e.g. in the region of the conical recess, and pulled in axial direction away from the fluid inlet end 2101 to expand the spring element 230 to a preloaded state. The preloaded state may be predefined such that the spring force of the spring element 230 has a predefined value or at least deviates from the predefined value by less than a predefined target value. The tool may comprise a sensor and a processing unit to measure the spring force of the spring element 230. It may be operable to vary the expansion of the spring element 230 until the measured spring force deviates from the predefined value by less than the predefined target value.

For fixing the connection member 240 to the sealing element 220, the tool expediently fixes the position of the second end 2402 of the connection member 240 relative to the sealing element 220 and to the valve body 210 to hold the spring element 230 in the preloaded state. While the tool holds the spring element 230 in the preloaded state, the second axial end 2402 of the connection member 240 is fixed to the sealing element 220. In the present embodiment, the free end of the spring wire is for example crimped to the sealing element 220 in the axial opening 2203. Alternatively, the spring wire can also be spot-welded to the sealing element 220, for example.

After this fixation - or pre-fixation - the tool can be removed and the sealing element 220 retains the spring element 230 in the preloaded state due to the interaction via the connection member 240. Subsequently to crimping or spot-welding the connection member 240 to the sealing element 220, a brazed connection can be produced between the connection member 240 and the sealing element 220. In this way, a particularly gas-tight sealing of the axial opening 2203 of the sealing element 220 is achievable.

The fluid inlet end 2101 of the valve body 210 of the passive valve 200 is shifted into the lower portion 146 of the valve body of the active valve 100 as described in further detail above so that the valve bodies 145, 146 and 210 are hydraulically/fluidly coupled and the active valve 100 is operable to inject fuel into the upper portion 2107 of the cavity 2105 of the valve body 210 of the passive valve 200. The passive valve 200 opens and closes in reaction to the pressure change in the cavity 2105 brought about by the gas phase fuel injected into the cavity 2105 by the active valve 100 as a consequence of interrupting and enabling flow through the seat element 147.

When the armature 133 is displaced away from its closing position, gas phase fuel flows into the radial flow channels 144 of the seat element 147 of the active valve 100 which communicate with a central bore of the lower housing 146 that defines a flow path communicating with the cavity 2105 of the valve body 210 of the passive valve 200. The gas phase fuel in the cavity 2105 impresses pressure force on the sealing element 220. The pressure force on the sealing element 220, once it overcomes the bias force of the spring element 230, causes the sealing element 220 to move axially out of its closing position, away from a seat surface at the fluid outlet opening 2103 of the valve body 210 of the passive valve 200. This enables gas phase fuel to flow between the sealing element 220 and the fluid outlet end 2102 of the valve body 210 of the passive valve 200 into the poppet stop 250 from where it leaves the fuel injector 10 through the openings of the poppet stop 250.

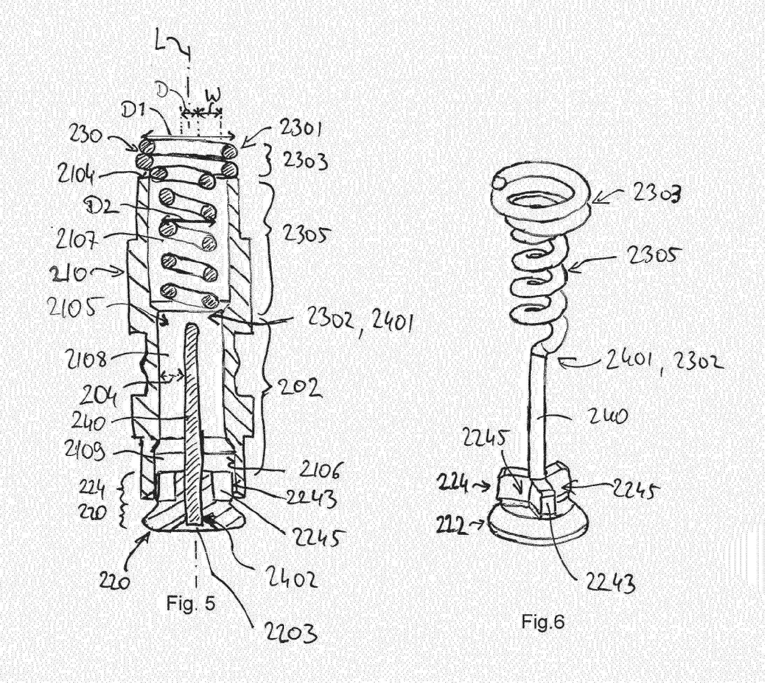

Figure 5 shows a passive valve 200 for a fuel injector 10 according to a second exemplary embodiment in a longitudinal section view. Figure 6 shows the subassembly consisting of spring element 230, connection member 240 and sealing element 220 of the passive valve 200 according to the second embodiment in a perspective view. The passive valve 200 according to the second embodiment may replace the passive valve 200 in the fuel injector 10 according to the first embodiment. It may or may not have a poppet stop 250 as described in the connection with the first embodiment.

The passive valve 200 according to the second embodiment corresponds in general to that according to the first embodiment. However, the sealing element 220 of the passive valve 200 according to the second embodiment comprises a guide portion 224 upstream of a sealing portion 222.

The sealing portion 222 is in the basic shape of a truncated cone. The guide portion 224 is represented by three webs on a top surface of the truncated cone-shaped sealing portion 220. The webs extend from a common central portion which comprises the axial opening 2203 - or at least an upper portion of the axial opening 2203 - in radial outward direction. The radially outward facing end faces of the webs constitute guiding surfaces 2243 which are in sliding mechanical contact with the internal surface 2106 of the valve body 210 for axially guiding the sealing element 220 with respect to the valve body 210 of the passive valve 200. The internal surface 2106 defines the cavity 2105 of the valve body 210. In circumferential direction, the webs are evenly spaced in the present embodiment so as to define flow channels 2245 of the guiding portion 224 along which the gas phase fuel can flow axially along the guiding portion 220 of the sealing element 220 to the sealing portion 222.

It is also conceivable that the guiding portion 224 has another number of webs, e.g. four webs. Further, it is conceivable that the webs are unevenly spaced in circumferential direction to promote an asymmetric distribution of the gas flow through the fluid outlet opening 2103.

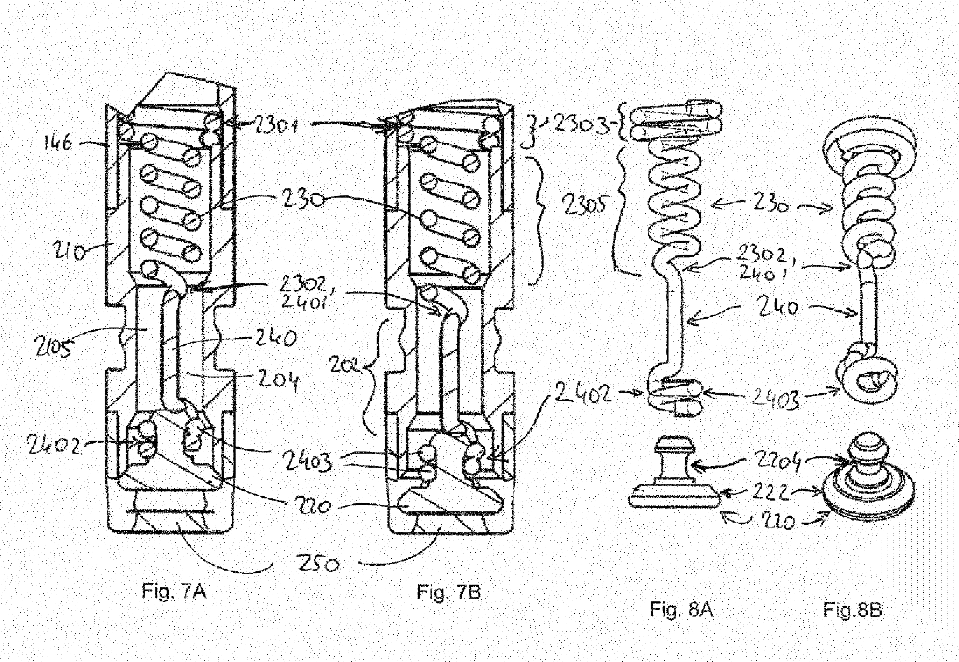

Figures 7A and 7B, 8A and 8B show a passive valve 200 according to a third exemplary embodiment. Figures 7A and 7B show the passive valve 200 in longitudinal section views in a closed and in a fully open configuration, corresponding to the views of Fig. 2A and 2B. The sealing element 220, the spring element 230 and the connection member 240 of the passive valve 200 are shown in a side view in figure 8A and in a perspective view in figure 8B, corresponding to the views of figures 3A and 3B. As in figures 3A and 3B, the sealing element 220 is shown separately from the connection member 240 of the spring element 230, for example before fixing the sealing element 220 to the connection member 240 in a method for producing the passive valve 200.

The passive valve 200 according to the third embodiment corresponds in general to that according to the first embodiment. However, its sealing element 220 is completely solid, without an axial opening 2203 as in the first and second embodiments.

Rather, the sealing element 220 has a mushroom-shaped upper portion upstream of the sealing portion 222. In other words, the upper portion of the sealing element 220 has a constriction 2204 which defines a circumferential recess.

The portion of the spring wire which represents the connection member 240 has a straight upper portion arranged in the constriction 2108 of the cavity 2105 of the valve body 210. The straight upper portion merges, at its first axial end 2401, with the spring element 230 as described in the first embodiment.

In contrast to the previous embodiments, however, the second axial end 2401 of the connection member 240 is not straight and does not project from a surface of the sealing element 220 on the side of the sealing element 220 remote from the fluid inlet end 2101. Rather the spring wire is bent to form two windings 2403 which are arranged in the recess which is defined by the constriction 2204 of the upper portion of the sealing element 220 . In this way, the windings 2403 of the connection member 240 are in form-fit and/or force-fit connection with the upper portion of the sealing element 220 to fix the connection member 240 to the sealing element 220. In the present embodiment, the second axial end 2402 of the connection member 240 is arranged upstream of the sealing portion 222 of the sealing element 220.

The invention is not limited to specific embodiments by the description on basis of these exemplary embodiments. Rather, it comprises any combination of elements of different embodiments. Moreover, the invention comprises any combination of claims and any combination of features disclosed by the claims.

## Claims

1. Passive valve (200) for a fuel injector (10) comprising
- a valve body (210) extending along a longitudinal axis (L) from a fluid inlet end (2101) to a fluid outlet end (2102), having a fluid outlet opening (2103) at the fluid outlet end (2102) and having a cavity (2105) which hydraulically couples the fluid inlet (2101) end to the fluid outlet end (2102),
- a sealing element (220) which seals the fluid outlet opening (2103) in a closing position and is axially displaceable away from the closing position for unsealing the fluid outlet opening (2103), and
- a spring element (230) having a first axial end (2301) which is fixedly coupled to the valve body (210) and a second axial end (2302) which is axially moveable relative to the valve body (210) wherein
- the passive valve (200) further comprises an elongated connection member (240), separate from and fixed to the sealing element (220), the connection member (240) bridging an axial gap (202) between the second axial end (2302) of the spring element (230) and the sealing element (220) and mechanically coupling the second axial end (2302) of the spring element (230) to the sealing element (220) and the connection member (240) transfers the spring force to the sealing element (220) for biasing the sealing element (220) in axial direction towards the closing position, wherein the passive valve (200) is an outward opening valve, **characterized in that** the spring element (230) is a tension spring and is preloaded by expansion so that it exerts a spring force on the connection member (240) and **in that** the spring element (230) and the connection member (240) are integrally formed as a one-pieced part, in particular from one piece of spring wire.

2. Passive valve (200) according to the preceding claim, wherein, in the region of the axial gap (202) between the spring element (230) and the sealing element (220), the connection member (240) is spaced apart from the valve body (210) by a radial gap (204) which extends completely circumferentially around the connection member (240), a minimum width (W) of the radial gap (204) being at least as large as a maximum dimension (D) of the connection member (240) in radial direction in the region of the axial gap (202) between the spring element (230) and the sealing element (220).

3. Passive valve (200) according to one of the preceding claims, wherein the sealing element (220) has an axial opening (2203) through which the connection member (240) extends and in particular projects on a side of the sealing element (220) facing away from the fluid inlet end (2101) .

4. Passive valve (200) according to one of claims 1 or 2, wherein the sealing element (220) has a constriction (2204) and the second axial end (2402) of the connection member (240) engages the constriction (2204) for establishing a form-fit and/or force-fit connection with the sealing element (220) and the second axial end (2402) of the connection member (240) has at least one winding (2403) which is located in the region of the constriction (2204) .

5. Passive valve (200) according to one of the preceding claims, wherein the sealing element (220) comprises a sealing portion (222) and a guide portion (224) upstream of the sealing portion (222), the guide portion (224) having a plurality of circumferentially distributed guiding surfaces (2243) which are sliding contact with an internal surface (2106) of the valve body (210) which defines the cavity (2105) and which are separated in circumferential direction by a plurality of flow channels (2245) extending along the guide portion (224) in axial direction to the sealing portion (222).

6. Passive valve (200) according to one of the preceding claims, wherein the cavity (2105) has a constriction (2108) separating an upper portion 2107 of the cavity (2105), adjacent to the fluid inlet end (2101), from a lower portion (2109) of the cavity (2105), adjacent to the fluid outlet end (2102, wherein the sealing element (220) is received in the lower portion (2109) of the cavity (2105), the spring element (230) is received in the upper portion (2107) of the cavity (2105) and at least a portion of the elongated connection member (240) is arranged inside the constriction (2108).

7. Passive valve (200) according to one of the preceding claims, wherein the spring element (230) is a coil spring.

8. Passive valve (200) according to one of the preceding claims, wherein
- the spring element (230) has first (2303) and second portions (2305) the second portion (2305) having a smaller lateral extension (D2) than the first portion (2303),
- the first portion (2303) comprising the first axial end (2301) of the spring element (230) and bearing on a front surface (2104) of the valve body (210) at the fluid inlet end (2101) for fixedly coupling the first axial end (2301) of the spring element (230) to the valve body (210),
- the second portion (2305) is arranged subsequent to the first portion (2303) in direction towards the fluid outlet end (2102) and received in the cavity (2105).

9. Fuel injector (10), in particular for injecting gaseous fuels, comprising a passive valve (200) according to one of the preceding claims and an active valve (100), wherein the active valve (100) is positioned upstream of the passive valve (200) and operable to inject fuel into the cavity (2105) of the valve body 210 of the passive valve (200) so that the sealing element (220) is displaced away from the closing position against the bias of the spring element (230) by the hydraulic or pneumatic force of the fuel injected into the cavity (2105) by the active valve (100) .

10. Fuel injector (10) according to claims 8 and 9, wherein the active valve (100) has a further valve body (145, 146) comprising a radially extending surface (1463) adjacent to an outflow end (1462), and the first portion (2303) of the spring element (230) is in contact with said radially extending surface (1463) on its side facing away from the front surface (2104) of the valve body (210) of the passive valve (200).

11. Fuel injector (10) according to the preceding claim, wherein the valve body (210) of the passive valve (200) is shifted into the outflow end (1462) of the further valve body (145, 146) .

12. Method for producing a passive valve (200) according to one of claims 1 to 8 comprising the following steps:
- expanding the spring element (230) to a preloaded state in which the spring force of the spring element (230) has a value which deviates less than a predefined target value from a predefined value and holding the spring element (230) in the preloaded state, and
- fixing the connection member (240) to the sealing element (220) while the spring element (230) is in the preloaded state.

13. Method according to the preceding claim for producing a passive valve (200) according to claim 3 or to one of claims 4 and 5 to 7 in direct or indirect dependence on claim 3, wherein the connection member (240) is shifted through the axial opening (2103) of the sealing element (220) before the spring element (230) is expanded to the preloaded state and expanding the spring element (230) to the preloaded state in particular comprises grasping the connection member (240) with a tool on the side of the sealing element (220) facing away from the fuel inlet end (2101) and pulling the connection member (240) with the tool for expanding the spring element (230).

## Patentansprüche

1. Passivklappe (200) für einen Kraftstoffeinspritzer (10), umfassend
- einen Ventilkörper (210), der sich entlang einer Längsachse (L) von einem Fluideinlassende (2101) zu einem Fluidauslassende (2102) erstreckt, eine Fluidauslassöffnung (2103) am Fluidauslassende (2102) aufweist und einen Hohlraum (2105) aufweist, der das Fluideinlassende (2101) mit dem Fluidauslassende (2102) hydraulisch koppelt,
- ein Verschlusselement (220), das die Fluidauslassöffnung (2103) in einer Schließstellung verschließt und von der Schließstellung axial verschiebbar ist, um die Fluidauslassöffnung (2103) zu öffnen, und
- ein Federelement (230), das ein erstes axiales Ende (2301), das mit dem Ventilkörper (210) fest gekoppelt ist, und ein zweites axiales Ende (2302), das in Bezug zum Ventilkörper (210) axial beweglich ist, aufweist, wobei
- die Passivklappe (200) ferner ein längliches Verbindungselement (240) umfasst, das vom Verschlusselement (220) getrennt und daran fixiert ist, wobei das Verbindungselement (240) einen axialen Spalt (202) zwischen dem zweiten axialen Ende (2302) des Federelements (230) und dem Verschlusselement (220) überbrückt und das zweite axiale Ende (2302) des Federelements (230) mit dem Verschlusselement (220) mechanisch koppelt und wobei das Verbindungselement (240) die Federkraft auf das Verschlusselement (220) überträgt, um das Verschlusselement (220) in Axialrichtung in die Schließstellung vorzuspannen, wobei die Passivklappe (200) eine nach außen öffnende Klappe ist, **dadurch gekennzeichnet, dass** das Federelement (230) eine Zugfeder ist und durch Ausdehnung vorgespannt ist, sodass sie eine Federkraft auf das Verbindungselement (240) aufbringt, und dadurch, dass das Federelement (230) und das Verbindungselement (240) als einstückiges Teil integral ausgebildet sind, insbesondere aus einem Stück Federdraht.

2. Passivklappe (200) nach dem vorstehenden Anspruch, wobei im Bereich des axialen Spalts (202) zwischen dem Federelement (230) und dem Verschlusselement (220) das Verbindungselement (240) vom Ventilkörper (210) durch einen radialen Spalt (204) beabstandet ist, der sich in Umfangsrichtung vollständig um das Verbindungselement (240) herum erstreckt, wobei die Mindestbreite (W) des radialen Spalts (204) mindestens genauso groß ist wie die Maximalabmessung (D) des Verbindungselements (240) in Radialrichtung im Bereich des axialen Spalts (202) zwischen dem Federelement (230) und dem Verschlusselement (220)

3. Passivklappe (200) nach einem der vorstehenden Ansprüche, wobei das Verschlusselement (220) eine axiale Öffnung (2203) aufweist, durch die sich das Verbindungselement (240) erstreckt und insbesondere auf einer vom Fluideinlassende (2101) abgewandten Seite des Verschlusselements (220) vorsteht.

4. Passivklappe (200) nach einem der Ansprüche 1 oder 2, wobei das Verschlusselement (220) eine Einschnürung (2204) aufweist und das zweite axiale Ende (2402) des Verbindungselements (240) in die Einschnürung (2204) eingreift, um eine formschlüssige und/oder kraftschlüssige Verbindung mit dem Verschlusselement (220) herzustellen, und wobei das zweite Ende (2402) des Verbindungselements (240) mindestens eine Windung (2403) aufweist, die im Bereich der Einschnürung (2204) angeordnet ist.

5. Passivklappe (200) nach einem der vorstehenden Ansprüche, wobei das Verschlusselement (220) einen Verschlussabschnitt (222) und einen dem Verschlussabschnitt (222) vorgelagerten Führungsabschnitt (224) umfasst, wobei der Führungsabschnitt (224) mehrere in Umfangsrichtung verteilte Führungsflächen (2243) aufweist, die sich im Gleitkontakt mit einer Innenfläche (2106) des Ventilkörpers (210) befinden, die den Hohlraum (2105) definiert, und die in Umfangsrichtung durch mehrere Strömungskanäle (2245) getrennt sind, die sich entlang des Führungsabschnitts (224) in Axialrichtung zum Verschlussabschnitt (222) erstrecken.

6. Passivklappe (200) nach einem der vorstehenden Ansprüche, wobei der Hohlraum (2105) eine Einschnürung (2108) aufweist, die einen oberen Abschnitt (2107) des Hohlraums (2105), der an das Fluideinlassende (2101) angrenzt, von einem unteren Abschnitt (2109) des Hohlraums (2105), der an das Fluidauslassende (2102) angrenzt, trennt, wobei das Verschlusselement (220) im unteren Abschnitt (2109) des Hohlraums (2105) aufgenommen ist, wobei das Federelement (230) im oberen Abschnitt (2107) des Hohlraums (2105) aufgenommen ist und zumindest ein Abschnitt des länglichen Verbindungselements (240) innerhalb der Einschnürung (2108) angeordnet ist.

7. Passivklappe (200) nach einem der vorstehenden Ansprüche, wobei das Federelement (230) eine Schraubenfeder ist.

8. Passivklappe (200) nach einem der vorstehenden Ansprüche, wobei
- das Federelement (230) einen ersten (2303) und zweiten Abschnitt (2305) aufweist, wobei der zweite Abschnitt (2305) eine kleinere laterale Ausdehnung (D2) als der erste Abschnitt (2303) aufweist,
- der erste Abschnitt (2303) das erste axiale Ende (2301) des Federelements (230) umfasst und auf einer Stirnfläche (2104) des Ventilkörpers (210) am Fluideinlassende (2101) aufliegt, um das erste axiale Ende (2301) des Federelements (230) mit dem Ventilkörper (210) zu koppeln,
- der zweite Abschnitt (2305) in die Richtung zum Fluidauslassende (2102) hinter dem ersten Abschnitt (2303) angeordnet und im Hohlraum (2105) aufgenommen ist.

9. Kraftstoffeinspritzer (10), insbesondere zum Einspritzen von Brenngasen, umfassend eine Passivklappe (200) nach einem der vorstehenden Ansprüche und eine Aktivklappe (100), wobei die Aktivklappe (100) der Passivklappe (200) vorgelagert positioniert und dazu funktionsfähig ist, Kraftstoff in den Hohlraum (2105) des Ventilkörpers (210) der Passivklappe (200) einzuspritzen, sodass das Verschlusselement (220) von der Schließstellung weg entgegen der Vorspannung des Federelements (230) durch die hydraulische oder pneumatische Kraft des von der Aktivklappe (100) in den Hohlraum (2105) eingespritzten Kraftstoffs verschoben wird.

10. Kraftstoffeinspritzer (10) nach Anspruch 8 und 9, wobei die Aktivklappe (100) einen weiteren Ventilkörper (145, 146) aufweist, der eine sich radial erstreckende Fläche (1463) umfasst, die an ein Abflussende (1462) angrenzt, und wobei der erste Abschnitt (2303) des Federelements (230) die sich radial erstreckende Fläche (1463) auf der von der Stirnfläche (2104) des Ventilkörpers (210) der Passivklappe (200) abgewandten Seite berührt.

11. Kraftstoffeinspritzer (10) nach dem vorstehenden Anspruch, wobei der Ventilkörper (210) der Passivklappe (200) in das Abflussende (1462) des weiteren Ventilkörpers (145, 146) verlagert wird.

12. Verfahren zur Herstellung einer Passivklappe (200) nach einem der Ansprüche 1 bis 8, die folgenden Schritte umfassend:
- Ausdehnen des Federelements (230) in einen vorgespannten Zustand, in dem die Federkraft des Federelements (230) einen Wert aufweist, der von einem festgelegten Wert weniger abweicht als ein festgelegter Sollwert, und Halten des Federelements (230) im vorgespannten Zustand und
- Fixieren des Verbindungselements (240) am Verschlusselement (220), während sich das Federelement (230) im vorgespannten Zustand befindet.

13. Verfahren nach dem vorstehenden Anspruch zur Herstellung einer Passivklappe (200) nach Anspruch 3 oder nach einem der Ansprüche 4 und 5 bis 7 in direkter oder indirekter Abhängigkeit von Anspruch 3, wobei das Verbindungselement (240) durch die axiale Öffnung (2103) des Verschlusselements (220) verlagert wird, bevor das Federelement (230) in den vorgespannten Zustand ausgedehnt wird, und das Ausdehnen des Federelements (230) in den vorgespannten Zustand insbesondere das Greifen des Verbindungselements (240) mit einem Werkzeug auf der vom Fluideinlassende (2101) abgewandten Seite des Verschlusselements (220) und das Ziehen des Verbindungselements (240) mit dem Werkzeug zum Ausdehnen des Federelements (230) umfasst.

## Revendications

1. Soupape passive (200) pour un injecteur de carburant (10), comprenant
- un corps de soupape (210) s'étendant le long d'un axe longitudinal (L) depuis une extrémité d'entrée de fluide (2101) jusqu'à une extrémité de sortie de fluide (2102), ayant une ouverture de sortie de fluide (2103) à l'extrémité de sortie de fluide (2102) et ayant une cavité (2105) qui couple hydrauliquement l'extrémité entrée de fluide (2101) à l'extrémité de sortie de fluide (2102),
- un élément d'étanchéité (220) qui effectue l'étanchéité de l'ouverture de sortie de fluide (2103) dans une position de fermeture et est axialement déplaçable à l'opposé de la position de fermeture pour annuler l'étanchéité de l'ouverture de sortie de fluide (2103), et
- un élément ressort (230) ayant une première extrémité axiale (2301) qui est couplée de façon fixe au corps de soupape (210) et une seconde extrémité axiale (2302) qui est axialement mobile relativement au corps de soupape (210) dans laquelle
- la soupape passive (200) comprend en outre un organe de raccordement allongé (240), séparé de, et fixé à, l'élément d'étanchéité (220), l'organe de raccordement (240) couvrant un espace axial (202) entre la seconde extrémité axiale (2302) de l'élément ressort (230) et l'élément d'étanchéité (220) et couplant mécaniquement la seconde extrémité axiale (2302) de l'élément ressort (230) à l'élément d'étanchéité (220) et l'organe de raccordement (240) transfère la force de ressort à l'élément d'étanchéité (220) pour solliciter l'élément d'étanchéité (220) en direction axiale vers la position de fermeture, dans laquelle la soupape passive (200) est une soupape s'ouvrant vers l'extérieur, **caractérisée en ce que** l'élément ressort (230) est un ressort de tension et est préchargé par extension pour qu'il exerce une force de ressort sur l'organe de raccordement (240) et **en ce que** l'élément ressort (230) et l'organe de raccordement (240) sont formés de façon monobloc sous forme de partie monopièce, en particulier à partir d'une pièce de fil à ressort.

2. Soupape passive (200) selon la revendication précédente, dans laquelle, dans la région de l'espace axial (202) entre l'élément ressort (230) et l'élément d'étanchéité (220), l'organe de raccordement (240) est espacé du corps de soupape (210) par un espace radial (204) qui s'étend complètement circonférentiellement autour de l'organe de raccordement (240), une largeur minimum (W) de l'espace radial (204) étant au moins aussi grande qu'une dimension maximum (D) de l'organe de raccordement (240) en direction radiale dans la région de l'espace axial (202) entre l'élément ressort (230) et l'élément d'étanchéité (220).

3. Soupape passive (200) selon l'une des revendications précédentes, dans laquelle l'élément d'étanchéité (220) a une ouverture axiale (2203) à travers laquelle l'organe de raccordement (240) s'étend et en particulier fait saillie sur un côté de l'élément d'étanchéité (220) faisant face à l'opposé de l'extrémité d'entrée de fluide (2101).

4. Soupape passive (200) selon l'une des revendications 1 ou 2, dans laquelle l'élément d'étanchéité (220) a un rétrécissement (2204) et la seconde extrémité axiale (2402) de l'organe de raccordement (240) entre en prise avec le rétrécissement (2204) pour établir une liaison à complémentarité de forme et/ou à ajustement forcé avec l'élément d'étanchéité (220) et la seconde extrémité axiale (2402) de l'organe de raccordement (240) a au moins un enroulement (2403) qui est situé dans la région du rétrécissement (2204).

5. Soupape passive (200) selon l'une des revendications précédentes, dans laquelle l'élément d'étanchéité (220) comprend une portion d'étanchéité (222) et une portion de guidage (224) en amont de la portion d'étanchéité (222), la portion de guidage (224) ayant une pluralité de surfaces de guidage (2243) circonférentiellement distribuées qui sont en contact coulissant avec une surface interne (2106) du corps de soupape (210) qui définit la cavité (2105) et qui sont séparées en direction circonférentielle par une pluralité de canaux d'écoulement (2245) s'étendant le long de la portion de guidage (224) en direction axiale jusqu'à la portion d'étanchéité (222).

6. Soupape passive (200) selon l'une des revendications précédentes, dans laquelle la cavité (2105) a un rétrécissement (2108) séparant une portion supérieure (2107) de la cavité (2105), adjacente à l'extrémité d'entrée de fluide (2101), d'une portion inférieure (2109) de la cavité (2105), adjacente à l'extrémité de sortie de fluide (2102), dans laquelle l'élément d'étanchéité (220) est reçu dans la portion inférieure (2109) de la cavité (2105), l'élément ressort (230) est reçu dans la portion supérieure (2107) de la cavité (2105) et au moins une portion de l'organe de raccordement allongé (240) est agencée à l'intérieur du rétrécissement (2108).

7. Soupape passive (200) selon l'une des revendications précédentes, dans laquelle l'élément ressort (230) est un ressort hélicoïdal.

8. Soupape passive (200) selon l'une des revendications précédentes, dans laquelle
- l'élément ressort (230) a des première (2303) et seconde (2305) portions, la seconde portion (2305) ayant une extension latérale plus petite (D2) que la première portion (2303),
- la première portion (2303) comprenant la première extrémité axiale (2301) de l'élément ressort (230) et appuyant sur une surface avant (2104) du corps de soupape (210) à l'extrémité d'entrée de fluide (2101) pour coupler de façon fixe la première extrémité axiale (2301) de l'élément ressort (230) au corps de soupape (210),
- la seconde portion (2305) est agencée de façon subséquente à la première portion (2303) en direction vers l'extrémité de sortie de fluide (2102) et reçue dans la cavité (2105).

9. Injecteur de carburant (10), en particulier pour injecter des carburants gazeux, comprenant une soupape passive (200) selon l'une des revendications précédentes et une soupape active (100), dans lequel la soupape active (100) est positionnée en amont de la soupape passive (200) et utilisable pour injecter un carburant dans la cavité (2105) du corps de soupape (210) de la soupape passive (200) pour que l'élément d'étanchéité (220) soit déplacé à l'opposé de la position de fermeture contre la sollicitation de l'élément ressort (230) par la force hydraulique ou pneumatique du carburant injecté dans la cavité (2105) par la soupape active (100).

10. Injecteur de carburant (10) selon les revendications 8 et 9, dans lequel la soupape active (100) a un corps de soupape supplémentaire (145, 146) comprenant une surface s'étendant radialement (1463) adjacente à une extrémité d'écoulement sortant (1462), et la première portion (2303) de l'élément ressort (230) est en contact avec ladite surface s'étendant radialement (1463) sur son côté faisant face à l'opposé de la surface avant (2104) du corps de soupape (210) de la soupape passive (200).

11. Injecteur de carburant (10) selon la revendication précédente, dans lequel le corps de soupape (210) de la soupape passive (200) est mû dans l'extrémité d'écoulement sortant (1462) du corps de soupape supplémentaire (145, 146).

12. Procédé pour produire une soupape passive (200) selon l'une des revendications 1 à 8, comprenant les étapes suivantes :
- l'extension de l'élément ressort (230) jusqu'à un état préchargé dans lequel la force de ressort de l'élément ressort (230) a une valeur qui s'écarte, de moins qu'une valeur cible prédéfinie, d'une valeur prédéfinie et le maintien de l'élément ressort (230) dans l'état préchargé, et
- la fixation de l'organe de raccordement (240) à l'élément d'étanchéité (220) alors que l'élément ressort (230) est dans l'état préchargé.

13. Procédé selon la revendication précédente pour produire une soupape passive (200) selon la revendication 3 ou l'une des revendications 4 et 5 à 7 lorsqu'elles dépendent directement ou indirectement de la revendication 3, dans lequel l'organe de raccordement (240) est mû à travers l'ouverture axiale (2103) de l'élément d'étanchéité (220) avant que l'extension de l'élément ressort (230) soit effectuée jusqu'à l'état préchargé et l'extension de l'élément ressort (230) jusqu'à l'état préchargé comprend en particulier la préhension de l'organe de raccordement (240) avec un outil sur le côté de l'élément d'étanchéité (220) faisant face à l'opposé de l'extrémité d'entrée de carburant (2101) et le tirage de l'organe de raccordement (240) avec l'outil pour effectuer l'extension de l'élément ressort (230).
